# EUROPÄISCHE PATENTSCHRIFT

(11) **EP 3 365 961 B1**
(45) Veröffentlichungstag und Bekanntmachung des Hinweises auf die Patenterteilung: **03.06.2020**
(21) Anmeldenummer: 16790873.0
(22) Anmeldetag: 12.10.2016
(51) Int. Cl.: H02K 11/00, H02K 5/20, H02K 11/215, H02K 11/33, B60K 1/04, H01M 2/10

(54) **ELEKTRO-ANTRIEBSSYSTEM**
ELECTRO DRIVE SYSTEM
SYSTÈME DE PROPULSION ÉLECTRIQUE

(30) Priorität: 19.10.2015 DE 102015013403
(43) Veröffentlichungstag der Anmeldung: 29.08.2018
(73) Patentinhaber: Bergische Universität Wuppertal, 42119 Wuppertal (DE)
(72) Erfinder: BUTZMANN, Stefan, 58579 Schalksmühle (DE); FINKE, Marius, 50769 Köln (DE)
(74) Vertreter: Cohausz Hannig Borkowski Wißgott
(86) Internationale Anmeldenummer: PCT/EP2016/001688
(87) Internationale Veröffentlichungsnummer: WO 2017/067644

(56) Entgegenhaltungen:
- EP-A1- 2 500 960
- DE-A1-102012 103 178
- DE-U1-202014 104 276
- US-A1- 2003 228 516
- US-A1- 2005 184 689
- US-A1- 2010 212 980
- US-A1- 2012 168 239
- US-A1- 2015 228 411

## Beschreibung

Die Erfindung betrifft ein Elektro-Antriebssystem, insbesondere für Fahrzeuge, umfassend einen Elektromotor und eine Energieversorgung, insbesondere einschließlich Pulswechselrichter und Leistungselektronik, wobei die Energieversorgung radial außen am Elektromotor anliegend und in Umfangsrichtung um den Elektromotor herum angeordnet ist.

Das Dokument US 2012/168239 A1 offenbart ein Elektro-Antriebssystem, bei dem eine Energieversorgung mit Zellen um den Elektromotor herum angeordnet ist, wobei der Motor mittels einer Leistungselektronik mit der Energie der Energieversorgung betreibbar ist.

Heutige Antriebssysteme dieser Art umfassen im Bereich der Energieversorgung üblicherweise Energiespeicherzellen, wie beispielsweise Batterien, worunter insbesondere solche der wiederaufladbaren Art verstanden werden, wie z.B. Lithium-Polymer-Akkus. Zusätzlich sind regelmäßig in einem solchen Antriebssystem Pulswechselrichter vorgesehen.

Hierbei haben die Energiespeicherzellen die Aufgabe, die für den Betrieb des Antriebssystems, insbesondere das Fahren eines Fahrzeugs benötigte Energie bereitzustellen bzw. während des Ladens zu speichern. Der Pulswechselrichter wandelt die von der Batterie bereitgestellte Gleichspannung in eine üblicherweise dreiphasige Wechselspannung, mit der ein Elektromotor, z.B. eine Synchron- oder Asynchronmaschine dann über eine Leistungselektronik betrieben wird, welche die Ansteuerung der Statorwicklungen übernimmt.

Die Energiespeicherzellen, Pulswechselrichter und Leistungselektronik werden hierbei meist unabhängig voneinander gefertigt und bilden selbstständige Einheiten, die über Kabelbäume miteinander verbunden werden. Hierbei ist bei der Systemauslegung immer ein geeigneter Kompromiss zwischen der Größe der Ströme, die in dem System fließen und der Spannungslage zu finden.

Für ein Antriebssystem mit einer Leistung von z.B. 100kW könnte die Batterie entweder mit einer DC-Spannung von 100V und einem Ausgangsstrom von ca. 1000A ausgelegt werden oder aber mit höheren Spannungen und entsprechend niedrigeren Strömen.

Beispielsweise im Anwendungsgebiet der heutigen Elektrofahrzeuge hat sich zur Zeit eine Spannungslage von ca. 400-600V durchgesetzt, was zu Strömen in Bereich von einigen hundert Ampere führt. Niedrige Spannungen und höhere Ströme sind in den bisherigen Antriebssystemen nicht sinnvoll umsetzbar, da die Querschnitte der stromführenden Kabel und Motorwicklungen in diesem Fall massiv ansteigen müssten, was zu einer Erhöhung des Fahrzeuggewichts und der Kosten führen würde.

Die Spannungslage von typ. > 400V führt weiterhin im bisherigen Stand der Technik zu erheblichen Anforderungen hinsichtlich der elektrischen Sicherheit solcher Systeme und bringt erhebliche Aufwände bzgl. Isolation der einzelnen Komponenten vom Fahrzeug-Chassis und der entsprechenden Isolationsüberwachung mit sich.

Diese Aufwände könnten unter Bezug auf VDE-Normen erst für Spannungen <60V reduziert werden. Die jedoch dabei benötigten deutlich erhöhten Ströme können jedoch bei den bisherigen Antriebssystemen aufgrund der zu überbrückenden Strecken und der dafür nötigen Leitungsquerschnitte nicht wirtschaftlich gehandhabt werden.

Ein wesentliches Kriterium bei der Auslegung eines elektrischen oder hybriden Antriebs für Fahrzeuge ist dabei die volumetrische Energie- bzw. Leistungsdichte, d.h. das Volumen des elektrischen Antriebsstrangs bezogen auf den Energieinhalt (der ein Maß für die Reichweite des Fahrzeugs darstellt) bzw. bezogen auf das Gewicht des Antriebsstrangs.

Vor dem Hintergrund vorgenannter Erläuterungen ist es eine Aufgabe der Erfindung einen solchen elektrischen Antrieb möglichst kompakt zu fertigen (d.h. mit minimalem Volumen)und so ein Antriebssystem bereit zu stellen, das die zu überbrückenden Distanzen zwischen der Energieversorgung und dem betriebenen Elektromotor reduziert. Weiterhin ist es bevorzugt auch eine Aufgabe der Erfindung, ein Antriebssystem zu schaffen, das eine Redundanz in der Energieversorgung bereitstellt und weiter bevorzugt mit gegenüber der heutigen typischen Spannungslage deutlich verringerten Spannungen betrieben werden kann, insbesondere mit Phasenspannungen kleiner gleich 60 Volt, um die Isolationsanforderungen zu minimieren und so ebenfalls die erforderlichen Abstände zwischen den einzelnen Sub-Komponenten und damit in letzter Konsequenz auch die Kosten.

Diese Aufgabe wird erfindungsgemäß durch ein Elektro-Antriebssystem nach Anspruch 1 gelöst.

Die Erstreckung der Energieversorgung, bzw. eines diese aufnehmenden Gehäuses muss nicht zwingend über den vollen Umfangswinkel von 360 Grad erfolgen, ist jedoch bevorzugt vorgesehen, so dass in diesem Fall ein Elektromotor vollumfänglich von der Energieversorgung umgeben ist.

Der wesentliche Gedanke der Erfindung ist es, die Energieversorgung örtlich so nah wie möglich an den Elektromotor heranzuführen. Durch die Anordnung radial außen am Elektromotor, insbesondere also an dessen äußerer Gehäusemantelfläche, die - abgesehen von einer evtl. Oberflächenkonturierung / -strukturierung - regelmäßig zylindrisch ausgebildet ist, besteht allenfalls noch die Notwendigkeit, abgesehen von inneren Stromwegen, die Energie aus der Energieversorgung über die axiale Länge des Elektromotors und ggfs. die radiale Beabstandung zwischen den Statoranschlüssen und der Energieversorgung zu führen. Die zu überbrückenden Wege sind also ersichtlich gegenüber dem Stand der Technik deutlich reduziert.

Selbst bei einem Betrieb eines solchen Antriebssystems mit den bislang verwendeten Spannungen ergeben sich bereits deutliche Vorteile, wobei die Erfindung jedoch auch die Möglichkeit erschließt, die Spannungslage abzusenken, da damit bedingte erhöhte Leiterquerschnitte zur Führung gleichbleibender Leistung in den verkürzten Leitungswegen handhabbar werden.

Die Erfindung sieht dabei vor, die Energieversorgung, insbesondere die dafür benötigten Energiespeicherzellen (Batteriezellen) in einem hohlzylindrischen Gehäuse anzuordnen, in dessen inneren hohlen Bereich der Elektromotor angeordnet ist. Bevorzugt liegen dabei die Zylinderachse der Energieversorgung, bzw. von dessen Gehäuse und die Motorachse kollinear. Weiterhin bevorzugt ist die Anordnung so, dass die axiale Länge der Energieversorgung, bzw. von dessen Gehäuse zumindest im Wesentlichen gleich der axialen Länge des Motorgehäuses ist, allenfalls bis zu 150% von dessen Länge entspricht.

Die erfindungsgemäße Anordnung schafft insgesamt eine handhabbare Einheit, die durch die äußeren Abmessungen der Energieversorgung definiert ist und darin komplett den Elektromotor umfasst, insbesondere auch die gesamte Elektronik zur Steuerung des Elektromotors und für das Energiemanagement der Energiespeicherzellen.

Somit ergibt sich auch eine erhöhte Wartungsfreundlichkeit, da alle wesentlichen Komponenten zum Betrieb lokal konzentiert sind, was auch im bisherigen Spannungsbereich die Isolationsanforderungen reduziert, aufgrund der stärkeren Einkapselung der spannungsführenden Bauteile. Beispielsweise besteht die Möglichkeit in praktisch jeder Werkstatt das komplette Antriebssystem zu tauschen.

Die Erfindung kann in bevorzugter Ausführung vorsehen, dass das hohlzylindrische Gehäuse eine Vielzahl von Ausnehmungen aufweist, in welchen Energiespeicherzellen aufgenommen sind oder zumindest aufnehmbar sind. Diese Ausnehmungen, insbesondere auch weitere zum Betrieb benötigte Baugruppen sind dabei bevorzugt komplett zwischen Innenwandung und Außenwandung des hohlzylindrischen Gehäuses angeordnet.

Beispielsweise kann es vorgesehen sein, die Ausnehmungen zylindrisch auszugestalten, so dass am Markt übliche Batteriezellen mit standardisierten Baugrößen darin aufgenommen werden können, z.B. solche, wie Sie aus Laptop-Akkus bekannt sind. Die Ausnehmungen sind dabei bevorzugt so orientiert, dass diese sich in axialer Richtung erstrecken. In den Ausnehmungen können bevorzugt die Batteriezellen in beiden möglichen, sich um 180 Grad unterscheidenden Einbaulagen angeordnet werden, was die gewünschte elektrische Verschaltung vereinfacht.

Die Erfindung sieht weiterhin vor, dass das hohlzylindrische Gehäuse zur Bildung von Untereinheiten unterteilt ist. Hierdurch ergibt sich zum einen eine größere Wartungsfreundlichkeit und Kostenreduzierung, z.B. wenn defekte Teile ausgetauscht werden müssen.

Zum anderen erschließt sich jedoch auch die Möglichkeit die Energiespeicherzellen (Batteriezelle) innerhalb einer Untereinheit und/oder die Untereinheiten untereinander je nach Wunsch elektrisch parallel oder in Reihe zu verschalten.

Die Erfindung sieht hierfür in einer möglichen Alternativen vor, dass in der axialen Richtung das hohlzylindrische Gehäuse der Energieversorgung in mehrere Ringelemente unterteilt ist, wobei jedes Ringelement in Umfangsrichtung in wenigstens zwei Segmente unterteilt ist. Z.B. kann dabei die axiale Länge jedes Ringelementes angepasst sein, um genau eine axial liegende Energiespeicherzelle (Batteriezelle) in einer jeweiligen zylindrischen Ausnehmung aufzunehmen. Die axiale Länge eines Ringelementes kann z.B. genau gleich oder auch (etwas) kleiner sein als die axiale Länge einer Energiespeicherzelle. Ebenso kann die axiale Länge auf ein Vielfaches (wenigstens Zweifaches) der axialen Länge einer Energiespeicherzelle angepasst sein. Ein jedes solches Ringelement kann ein in sich abgeschlossenes Energiespeichermodul ausbilden, insbesondere mit welchem alleine bereits der Betrieb des Elektromotors möglich sein kann.

Die Erfindung sieht in einer anderen möglichen Alternativen vor, dass das hohlzylindrische Gehäuse in Umfangsrichtung in wenigstens zwei Segmente unterteilt ist. Jedes Segment kann eine Winkelerstreckung von 360° / Anzahl der Segmente aufweisen. Ein jedes solches sich über die gesamte axiale Länge des hohlzylindrischen Gehäuses erstreckende Segment kann ein in sich abgeschlossenes Energiespeichermodul ausbilden, insbesondere mit welchem alleine bereits der Betrieb des Elektromotors möglich sein kann.

Die bevorzugte Alternative ist diejenige, bei der die Unterteilung des hohlzylindrischen Gehäuses in axialer Richtung undin Umfangsrichtung kombiniert ist, so dass jedes vorgenannte Ringelement in Umfangsrichtung in wenigstens zwei Segmente unterteilt ist. Jedes (Ringelemente-) Segment kann wiederum eine Winkelerstreckung von 360° / Anzahl der Segmente aufweisen. Hier bildet die Gesamtanzahl aller in axialer Richtung an einer gemeinsamen Umfangsposition hintereinanderliegenden Segmente, insbesondere durch elektrischen Verschaltung, ein Energiespeichermodul aus, mit welchem alleine bereits der Betrieb des Elektromotors möglich ist. Es ergibt sich hierdurch eine Anzahl von Energiespeichermodulen, die der Anzahl der Segmente (pro Ringelement) entspricht.

Bei einer solchen Konstruktion weist das Gehäuse der Energieversorgung somit insgesamt eine Anzahl von Untereinheiten auf, die der Anzahl der Ringelemente multipliziert mit der Anzahl der Segmente pro Ringelement entspricht. Eine entsprechende Vielfalt möglicher elektrischer Verschaltungen kann hierdurch realisiert werden.

In einer weiterhin bevorzugten Ausführung der vorgenannten Konstruktion kann es vorgesehen sein, dass zwischen je zwei benachbart axial hintereinander liegenden Segmenten von Ringelementen wenigstens eine Verbindungsplatine angeordnet ist. Es kann jedem Segment eine eigene Verbindungsplatine zugeordnet sein.

Durch eine solche Verbindungsplatine können die Energiespeicherzellen eines jeden Segmentes untereinander kontaktiert sein, z.B. alle in Reihe geschaltet sein oder alle parallel geschaltet sein oder in Gruppen unterteilt sein, wobei in verschiedenen Gruppen die Energiespeicherzellen unterschiedlich verschaltet sein können (Reihe oder parallel) oder bei gleicher gewählten Verschaltung in den Gruppen bei den verschiedenen Gruppen unterschiedlich hinsichtlich der Einbaulage orientiert sein können.

Ein jeweilige Verbindungsplatine kann auch die Verschaltung zwischen den beiden axial benachbarten Segmenten vornehmen, z.B. diese in Reihe oder wiederum parallel schalten. Mit den Verbindungsplatinen können bevorzugt so die Energiespeicherzellen wenigstens einer Teilanzahl, bevorzug aller an einer gemeinsamen Umfangsposition axial hintereinander angeordneten Segmente elektrisch in Reihe geschaltet sind. In einer möglichen Ausführung kann es vorgesehen sein, dass sich über die axiale Länge aller Segmente an derselben Umfangsposition sich z.B. eine Spannung ergibt, die der Summe der in den Segmenten verwendeten Energiespeicherzellen entspricht. Bei dieser Ausführung würden hingegen die Pole an unterschiedlichen axialen Seiten liegen. Beispielsweise kann es in einer bevorzugten Ausführung vorgesehen sein, dass in einem jeden Segment zwei Gruppen von Energiespeicherzellen gebildet sind, wobei in jeder Gruppe die Energiespeicherzellen parallel geschaltet sind. Eine Gruppe kann z.B. radial innen und eine radial außen liegend angeordnet sein. Die Energiespeicherzellen können in den verschiedenen Gruppen bevorzugt um 180 Grad unterschiedliche Orientierung der Einbaulage aufweisen. Das kann den Vorteil erschließen, in axialer Richtung über die Segmente gemeinsamer Umfangsposition hinweg die parallel geschalteten Energiespeicherzellen der einen Gruppe und die parallel geschalteten Energiespeicherzellen der anderen Gruppe unabhängig voneinander in Reihe zu verschalten und hierbei die beiden Pole an derselben axialen Seite zugänglich zu haben, insbesondere an der Seite, an welcher gemäß den nachfolgenden Ausführungen wenigstens eine Steuerplatine, z.B. mit Leistungselektronik und/oder Pulswechselrichter vorgesehen ist.

Alle axialen hintereinander liegenden Segmente (der Ringe) an einer gemeinsamen Umfangsposition bilden so wiederum ein Energiespeichermodul mit an einer Seite zugänglichen Polen, quasi wie ein Batteriepack in der Querschnittsform eines Kreissegmentes.

Die Erfindung sieht es vor, dass die gebildeten Energiespeichermodule jeweils zusammen mit einer eigenen Elektronik auf einer Steuerplatine ein jeweiliges autarkes Funktionsmodul bilden, das jeweils alleine ausreicht, um den Motor zu betreiben. Dafür kann die Elektronik einen Pulswechselrichter und Schalter zur Bestromung des Stators umfassen. Es ergibt sich dadurch eine Anzahl von Funktionsmodulen, die der Anzahl der Segmente (pro Ringelement) entspricht.

Hierdurch wird auch eine Redundanz geschaffen, da ein Antriebssystem dieser Art auch betriebsbereit ist, wenn z.B. ein Segment oder sogar alle an einer gemeinsamen Umfangsposition hintereinander liegenden Segmente (und damit ein Funktionsmodul) ausfallen, da hierdurch nicht die Betriebsspannung und die Statoransteuerung entfällt, sondern sich nur die Ladekapazität verringert, in Verbindung mit einem Fahrzeug also nur dessen Reichweite.

Es kann eine Elektronik vorgesehen sein, die die Funktion jedes Funktionsmoduls prüft und bei festgestelltem Defekt dieses komplett abschaltet. Die übrigen Funktionsmodule bleiben dabei betriebsbereit und damit das Antriebssystem insgesamt, lediglich unter Reduktion der Reichweite und des Drehmomentes.

Bevorzugt ist die Form einer jeweiligen Verbindungsplatine an die Form der jeweiligen Segmente angepasst, bevorzugt so, dass diese zwar formkongruent zu den Segmenten ist, jedoch etwas kleiner, um von den Segmenten umschlossen zu werden, ohne dass die Verbindungsplatine von außer halb des Gehäuses der Energieversorgungseinheit zugänglich ist, zumindest nicht ohne die Segmente voneinander zu separieren, die in jeglicher Ausführung bevorzugt im Betriebszustand bündig und einander kontaktierend verbunden sind. Beispielsweise kann so die Verbindungsplatine kreisringsegmentförmig ausgebildet sein. An einem in Umfangsrichtung liegenden Ende der Verbindungsplatine kann diese Kontakte aufweisen, um mit anderen Komponenten elektrisch verbunden zu werden, z.B. mit der nachfolgend beschriebenen Platine.

Die Erfindung kann in einer Weiterbildung vorsehen, dass in einem Bereich zwischen je zwei in Umfangsrichtung benachbarten Segmenten (an einer gemeinsamen axialen Position) bei allen axial hintereinander liegenden Segmenten einer gemeinsamen Umfangsposition eine sich achsparallel erstreckende Platine angeordnet ist, insbesondere die sich im Wesentlichen über die gesamte axiale Länge der hohlzylindrischen Energieversorgung erstreckt. Diese Platine kann mit jeder vorgenannten Verbindungsplatine zwischen zwei benachbart axial hintereinanderliegenden Segmenten elektrisch verbunden sein.

Diese Platine kann bevorzugt eine Elektronik zum Energiespeicherzellenmanagement, insbesondere zur Prüfung der insbesondere in jedem Segment oder in allen Segmenten einer gemeinsamen Umfangsposition gereihten Zellspannungen umfassen. Diese Platine und deren Elektronik kann auch vorgesehen sein, um die zuvor Funktionsprüfung vorzunehmen.

Die Erfindung sieht unabhängig von den möglichen verschiedenen Ausführungen allgemein vor, dass die durch in und mit den Segmenten nach Reihen- und / oder Parallelschaltung der darin enthaltenen Energiespeicherzellen erzeugten Spannungen genutzt werden, um mit wenigstens einer Steuerelektronik die Phasenspannungen für den Motor zu bilden. Eine solche Steuerelektronik wird durch Elektronikkomponenten auf wenigstens einer Steuerplatine gebildet, die stirnseitig des Elektromotor und/oder des Gehäuses der Energieversorgung angeordnet ist, insbesondere auf der von der Motorabtriebswelle abgewandten Seite. Dies hat den Vorteil, dass die statorseitigen Phasenanschlüsse des Elektromotors in axialer Richtung in diese wenigstens eine Steuerplatine kontaktierend eingefügt werden können.

Die wenigstens eine Steuerplatine ist in zumindest teilweiser Überdeckung der axialen Stirnflächen von der Energieversorgungseinheit (bzw. dessen Gehäuse) und dem Elektromotor angeordnet und eingerichtet, die Energie der Energieversorgungseinheit auf das Statorbestromungssystem des Elektromotors zu verteilen, insbesondere gesteuert oder geregelt zu verteilen.

Erfindungsgemäß ist jeweils einem jedem in Umfangsrichtung erstreckten Segment des hohlzylindrischen Gehäuses der Energieversorgung oder jeweils allen an einer gemeinsamen Umfangsposition angeordneten Segmenten von axial hintereinanderliegenden Ringelementen (Energiespeichermodul) eine eigene Steuerplatine zugeordnet, insbesondere die kreisringsegmentförmig ausgebildet ist und die an einen Teil des Statorbestromungssystems angeschlossen ist, insbesondere der sich über denselben Winkelbereich erstreckt, wie das betreffende Segment. Das genannte Energiespeichermodul bildet somit mit der jeweils zugeordneten Steuerplatine das bereits zuvor angesprochene Funktionsmodul, d.h. eine betriebsfertige Einheit zum Betrieb des Motors.

Durch alle den Segmenten jeweils zugeordneten, ggfs. untereinander verbundenen Steuerplatinen ist sodann insgesamt eine GesamtLeistungselektronik zur Steuerung des Elektromotors ausgebildet, an der die jeweiligen Spannungen, insbesondere die jeweiligen gereihten Summenspannungen von den an einer gemeinsamen Umfangsposition axial hintereinanderliegenden Segmenten anliegen. Hierdurch wird der eingangs genannte Vorteil erschlossen, dass der Elektromotor mit der Energie schon alleine der Segmente einer einzigen gemeinsamen Umfangsposition betreibbar ist, da die Gesamtleistungselektronik durch eine Summe einzelner Leistungselektroniken gebildet ist, die jeweils für sich in der Lage sind den Motor zu betreiben. Jede Leistungselektronik umfasst dabei bevorzugt einen Pulswechselrichter.

Eine ganz besonders bevorzugte Ausführungsform der Erfindung kann es vorsehen, dass das Statorbestromungssystem des Elektromotors durch eine Vielzahl bestrombarer Stäbe ausgebildet ist, die sich in axialer Richtung durch den Stator des Elektromotors erstrecken und an einem ihrer Enden mit einem gemeinsamen Kurzschlußring verbunden sind und an dem anderen Ende mit einer Steuerplatine verbunden sind, insbesondere einer Steuerplatine der vorgenannten Art, die stirnseitig angeordnet ist.

Es kann hier vorgesehen sein, dass die Stäbe einer Anzahl von mehr als 3 Phasen, bevorzugt wenigstens 20 Phasen, weiter bevorzugt wenigstens 30 Phasen zugeordnet sind. Durch diese signifikante Erhöhung der Phasenanzahl gegenüber dem Stand der Technik kann erzielt werden, dass die Spannungsdifferenz zwischen zwei Phasen oder einer Phase und Masse kleiner gleich 60 Volt ist. Dies führt zu dem eingangs genannten Vorteil, dass die Isolationsanforderungen deutlich kleiner sind und sich hierdurch insgesamt die Konstruktion vereinfacht und günstiger wird im Vergleich zum Stand der Technik.

Wenngleich die Ausbildung des Stators mit Stäben in dieser Ausführung bevorzugt ist, da der Nutfüllfaktor im Stator gegenüber Spulen verbessert ist, kann grundsätzlich eine solche Erhöhung der Phasenanzahl auch mit gewickelten Statorspulen erzielt werden und ist ebenso von der Erfindung umfasst.

Die bevorzugte Verwendung von Stäben führt auch zu dem Vorteil, dass niedrigere Motorinduktivitäten erzeugt werden, so dass die Reduzierung der Phasenspannungen der Beherrschung der Stromanstiegsgeschwindigkeiten zuträglich ist.

Die Schalter der Steuerplatine(n) zur Bestromung der Phasenanschlüsse des Stators können vorzugsweise als MOSFETs ausgeführt sind, insbesondere wenn die Betriebsspannung auf weniger als 60V reduziert wird. Die Schalter werden bevorzugt in einer Halbbrücken-Konfiguration betrieben, wobei jede Halbbrücke einen Stab des Motors versorgen kann.

In einer einfachen Ausführungsform der Erfindung kann das Statorbestromungssystems mit elektrischer Masse und einer positiven Versorgungsspannung betrieben werden. Ein bevorzugte Ausführung kann jedoch auch vorsehen, dass der Kurzschlussring an der der Leistungselektronik / Steuerplatine(n) gegenüberliegenden Seite auf Masse liegt und die Stäbe zwischen zwei um Masse herum symmetrische Spannungen geschaltet werden. Damit kann jeder Stab individuell und unabhängig von den anderen Stäben bestromt werden.

In einer bevorzugten Ausführungsform wird die magnetische Polpaarzahl im Rotor des Motors gleich der Anzahl der in Umfangsrichtung liegenden Segmente gewählt, von denen die an einer gemeinsamen Umfangsposition axial hintereinander liegenden Segmente alle elektrisch zu einer zusammenwirkenden Untereinheit zusammengeschaltet sein können, also bevorzugt ein in sich autarke Energieversorgungsuntereinheit der gesamten Energieversorgung bildet.

Die Leistungselektronik wird ebenfalls in eine entsprechende Anzahl von Subeinheiten unterteilt, wie es vorangehend anhand der mehreren Steuerplatinen erläutert wurde.

Dabei können räumlich an einer gemeinsamen Umfangsposition liegende Einheiten von Segmenten und Steuerplatinen zu Funktionsmodulen zusammengefasst werden, die unabhängig voneinander betrieben und somit als Subantriebs-Module angesehen werden können.

Bevorzugt kann es dabei vorgesehen sein, dass sich im Betrieb die Drehmomente der Funktionsmodule zu einem Gesamtdrehmoment für den Antrieb addieren, die Einzel-Drehmomente der jeweiligen Funktionseinheiten müssen jedoch nicht unbedingt identisch sein. Dieses Konzept bietet über die bloße Integration von Motor, Leistungselektronik und Batterie hinaus folgende bereits eingang angedeutete Vorteile:
1.) bei einem Ausfall eines Funktionsmoduls (zum Beispiel alle axial hintereinander liegenden Segmente einer Umfangsposition , deren Verbindungsplatinen, Batteriemanagementplatine und stirnseitige Steuerplatine) können die verbleibenden Funktionsmodule weiterhin betrieben werden, was einen Gesamtsystemausfall verhindert und lediglich zu einer Leistungs- bzw. Reichweiteneinbuße führt
2.) Da Batteriezellen unterschiedlich altern, ist im Laufe der Zeit mit unterschiedlichen Zellkapazitäten allein aufgrund von Streuung zu rechnen. Innerhalb eines Funktionsmoduls der Energieversorgung wird diese Streuung bevorzugt durch sog. passives Balancing ausgeglichen, d.h. (vereinfacht ausgedrückt) zu hoch geladene Zellen werden auf das Niveau der niedriger geladenen Zellen entladen. Alternativ kann innerhalb eines Funktionsmoduls das Balancing auch aktiv erfolgen, d.h. die Energie von zu hoch geladenen Zellen wird auf niedriger geladene Zellen mittels induktiven oder kapazitiven Verfahren übertragen.

Zwischen den Funktionsmodulen kann der Angleich allerdings auch über die Aufteilung der Gesamtdrehmoments auf die einzelnen Funktionsmodule erfolgen.

Zur Bestimmung des Lade- und Alterungszustands der Energiespeicherzellen / Batteriezellen sowie zur Einstellung des Drehmoments des Motors kann es bevorzugt vorgesehen sein, den Strom in der Energieversorgungseinheit, bevorzugt separat in jedem Funktionsmodul sowie in jedem einzelnen Stab zu überwachen.

Hierzu kann die Blechung des Motors durch weitere Bleche mit einem kleineren Innendurchmesser ergänzt werden, bei welchen die Nut bis zum Innendurchmesser verlängert ist. Hierdurch kann ein Hall-Sensor direkt von der Leistungselektronik in die Nut gesteckt werden. Der Sensor ist somit in den magnetischen Kreis um den jeweiligen Stab herum eingebunden, magnetisch störfest verbaut und gleichzeitig auf kürzest möglichem Weg mit der Auswerteeinheit, z.B. einem AD-Wandler verbunden.

Die Messung des Stroms in der Energieversorgung, bevorzugt jedem Funktionsmodul kann über Durchkontaktierungen in den Verbindungsplatinen erfolgen. Wenn ein Strom über diese fließt, so erzeugt dieser Strom einen Spannungsabfall, welcher im Batterie-Management-System ausgewertet wird. Somit dienen die Verbindungsplatinen nicht nur der Verbindung zwischen je zwei axial hintereinander liegenden Segmenten und der Herausführung der Zellspannungen, sondern erfüllen gleichzeitig die Aufgabe der Stromsensierung.

Es kann weiterhin vorgesehen sein, am Kurzschlussring zusätzlich einen zentralen Stromsensor anzuordnen, der den Strom vom Kurzschlussring gegen eine Referenz, z.B. ein Fahrzeugchassis misst. Im "Gut- Fall" ist der Strom durch diesen Sensor gleich der Summe der Ströme durch alle Stäbe, somit kann eine Diagnose, der einzelnen Stromerfassungseinheiten an den Stäben vorgenommen werden. Stimmt der an dem zentralen Sensor gemessene Wert nicht mit der Summe der Stabströme überein, so wird ein Fehler diagnostiziert.

Bei einer korrekt funktionierenden Regelung ist darüber hinaus der Strom durch den am Kurzschlussring angeordneten Sensor Null.

Zur Entwärmung (Kühlung) des Systems kann es vorgesehen werden, die im Elektromotor und der Leistungselektronik auf der oder den Steuerplatinen entstehende Wärme getrennt von der in der Energieversorgung, insbesondere in den Segmenten entstehende Wärme herauszuführen und eine möglichst geringe thermische Kopplung zwischen dem zylindrischen Gehäuse der Energieversorgung und den anderen beschriebenen Komponenten zu realisieren. Damit wird sichergestellt, dass die Motorwärme nicht zur Aufheizung der Energieversorgung und so zu einer beschleunigten Degradation der Batteriezellen führt.

Hierfür kann es vorgesehen sein, dass die Energieversorgung und der Elektromotor zueinander wärmetechnisch isoliert sind, insbesondere durch eine radialen Beabstandung, bevorzugt über welche hinweg die Gehäuse von der Energieversorgung und des Elektro-Motors nur durch Stege verbunden sind, welche also eine statische Anbindung ermöglichen, aber nur vergleichsweise wenig Wärmeübertrag zulassen.

Es kann insbesondere in Kombination mit der wärmetechnischen Entkopplung, allerdings auch unabhängig von dieser das hohlzylindrische Gehäuse der Energieversorgung, insbesondere jedes Segment in axialer Richtung auf die äußere Mantelfläche des Elektromotors aufsteckbar oder aufschiebbar sein, insbesondere mittels radialen Stegen (z.B. den vorgenannten), die zumindest endseitig in axialen Führungsnute gleitend eingreifen.

Der Elektromotor und die Energieversorgung weisen bevorzugt jeweils eine eigene und voneinander unabhängige Entwärmungssysteme auf, insbesondere durch Heatpipes, die sich axial durch den Elektro-Motor und/oder die Energieversorgung erstrecken.

Der Gesamtaufbau an Heatpipes kann 2-lagig ausgeführt sein, mit einer ersten Innenlage am äußeren Umfang des Elektromotors, die mit diesem sowie der Leistungselektronik thermisch verbunden ist.

Es kann dabei weiterhin vorgesehen sein, dass zwischen dem Gehäuse der Energieversorgung und dem Motor, insbesondere im vorgenannten radialen Abstandsbereich ein thermisch isolierendes Material verbaut ist, welches gleichzeitig auch die Heatpipes an den Motor presst (für eine gute thermische Verbindung), andererseits aber die Batteriezellen im Gehäuse der Energieversorgung von der Wärmeentwicklung des Motors und der Leistungselektronik isoliert.

Eine zweite äußere Lage von Heatpipes kann ausschließlich für die Entwärmung der Batteriezellen bzw. des Gehäuses der Energieversorgung verwendet werden , die bevorzugt am äußeren Umfang des Gehäuses der Energieversorgung montiert sind oder am Innenumfang, insbesondere zwischen thermischem Isolator und Gehäuse der Energieversorgung.

In einer weiteren Ausführungsform der Erfindung kann auch die Entwärmung von Motor und Leistungselektronik über Heatpipes erfolgen, insbesondere wie zuvor beschrieben und die Entwärmung der Energieversorgung kann über ein anderes Kühlkonzept bspw. eine Flüssigkeits-Kühlung vorgenommen werden.

In bevorzugter Ausführung sind die Heatpipes an die Stirnseite des Motors (der Leistungselektronik abgewandt) geführt und schaffen so eine thermische Schnittstelle, so dass die durch die Heatpipes axial entlagn der Motorerstreckung herausgeführte Wärme entweder durch Luft- oder durch Flüssigkeitskühlung abgeführt werden kann.

Zur Erfassung des Drehwinkels des Motors können klassische Rotor-Lage-Geber auf magnetisch-induktiver Basis eingesetzt werden. Diese eignen sich aufgrund ihrer Baugröße jedoch nur sehr bedingt für ein solch kompaktes System, so dass andere technische Lösungen hier vorteilhaft erscheinen.

Es erscheint vorteilhaft, die Drehwinkelerfassung über einen auf der Welle montierten Permanentmagneten und einen auf einer darüberliegenden Platine, z.B. der stirnseitigen Steuerplatine montierten Drehwinkelsensor zu realisieren. Hierfür kommen sowohl 360°-Hall-Sensoren infrage, besonders vorteilhaft erscheinen aber 360° magnetoresistive Sensoren basierend auf dem GMR oder auf dem TMR-Effekt. Aufgrund der Symmetrie des Systems bei einer geraden Polpaarzahl im Rotor und einer entsprechenden Zahl von

Energieversorgungsuntereinheiten (Funktionseinheiten) und Leistungselektronik-Enheiten (Steuerplatinen) kann in diesem Fall anstelle eines 360°-fähigen Drehwinkelsensors auch ein 180°-Drehwinkelsensor eingesetzt werden. Dies ermöglicht die Verwendung von AMR-Winkelsensoren (Anisotroper magnetoresistiver Effekt), welche besonders störfeldrobust und kostengünstig sind.

Eine bevorzugt Ausführungsform wird anhand der nachfolgenden Figuren beschrieben:

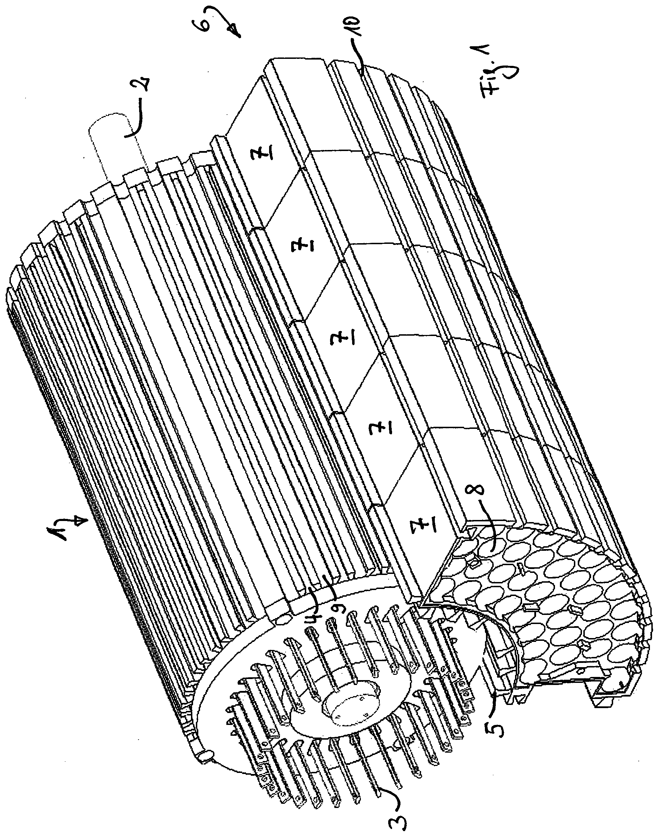

Die Figur 1 zeigt ein erfindungsgemäßes Elektro-Antriebssystem mit einem Elektromotor 1 mit einer Abtriebswelle 2 und gegenüberliegend aus dem Stator herausragenden Stäben 3 zur Bestromung des Stators. Die Stäbe können bevorzugt jeweils oder zu mehreren einer Phase zugeordnet sein, insbesondere mit einer Phasenspannung von jeweils kleiner 60 V.

Die äußere Mantelfläche des Elektromotors 1 weist in dieser Ausführung Nute 4 auf, hier mit Schwalbenschwanzprofil, in die korrespondierende Stege 5 an der inneren Mantelfläche der hier nur zu einem Teil gezeigte Energieversorgung 6 eingeschoben werden können.

Die Energieversorgung 6 ist in einem hohlzylindrischen Gehäuse untergebracht, das hier sowohl in axialer Richtung als auch in Umfangsrichtung unterteilt ist. Es ist hierdurch das gesamte hohlzylindrische Gehäuse in mehrere Ring-Segmente 7 gebildet, von denen hier nur diejenigen gezeigt sind, die an einer gemeinsamen Umfangsposition axial hintereinanderliegen. Diese gemeinsame Umfangsposition erstreckt sich hier über einen Winkelbereich von 90 Grad, da eine Aufteilung in Umfangsrichtungin 4 Segmente vorliegt.

Es ist hier vorgesehen in den zylindrischen Ausnehmungen 8 standardisierte Batteriezellen einzusetzen, um die Energieversorgung des Motors zu realisieren.

In den Nuten 9 können Heatpipes angeordnet werden, um stirnseitig in einer hier nicht gezeigten Leistungselektronik entstehende Wärme und die Wärme des Motors 1 auf die Seite der Abtriebswelle 2 zu überführen.

Auch die Ringsegmente 7 können außen Nute 10 aufweisen, in denen Heatpipes zum Wärmetransport einliegen können.

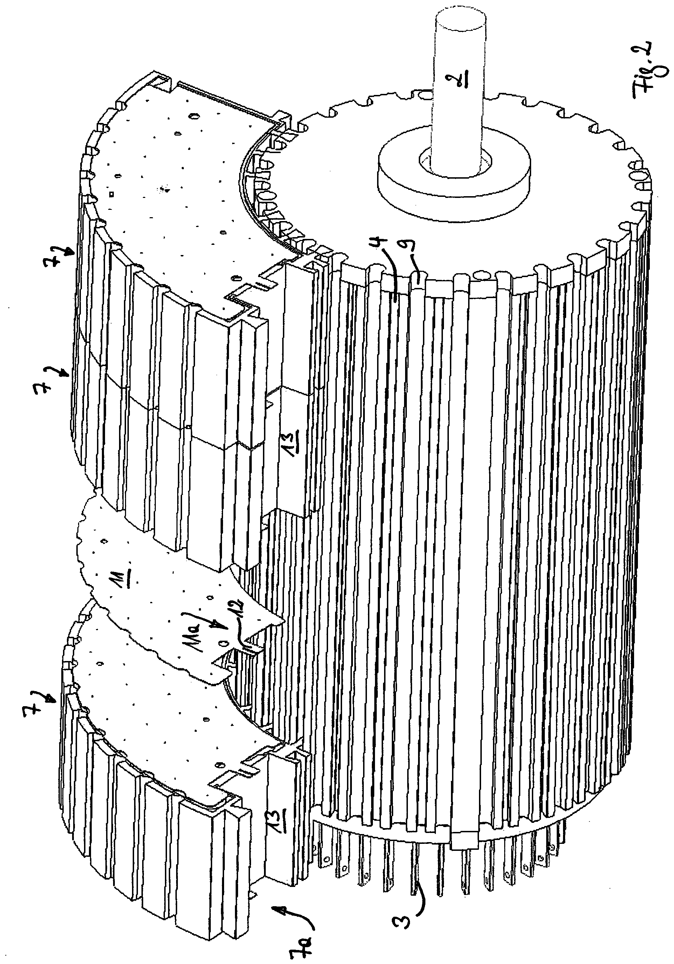

Die Figur 2 zeigt eine Ansicht, die verdeutlicht, dass zwischen zwei benachbarten Segmenten 7, insbesondere zwischen jedem Paar von zwei benachbarten Segmenten 7, die an gemeinsamer Umfangsposition axial hintereinander liegen, Verbindungsplatinen 11 vorgesehen sein können (insbesondere mindestens eine) , um die Verschaltung der Batteriezellen innerhalb jedes Segments 7 und zwischen den benachbarten Segmenten 7 vorzunehmen. Z.B. können hierdurch alle in den Segmenten enthaltenen Batteriezellen in Reihe geschaltet werden. Jedes Segment kann eine eigene zugeordnete Platine aufweisen
An einem in Umfangsrichtung liegenden Ende 11a weist die hier kreisringsegmentförmig ausgebildete Verbindungsplatine 11 Kontakte 12 auf, die mit einer hier nicht gezeigten Platine verbunden werden können, welche sich im Ausnehmungsbereich 13 befinden kann, der sich in axialer Richtung erstreckt und an einem in Umfangsrichtung liegenden Ende 7a jedes Segmentes angeordnet ist und somit ebenso zwischen je zwei in Umfangsrichtung aufeinander folgenden Segmenten angeordnet ist. Die nicht gezeigte Platine kann hier das Batteriemanagement der Batteriezellen übernehmen.

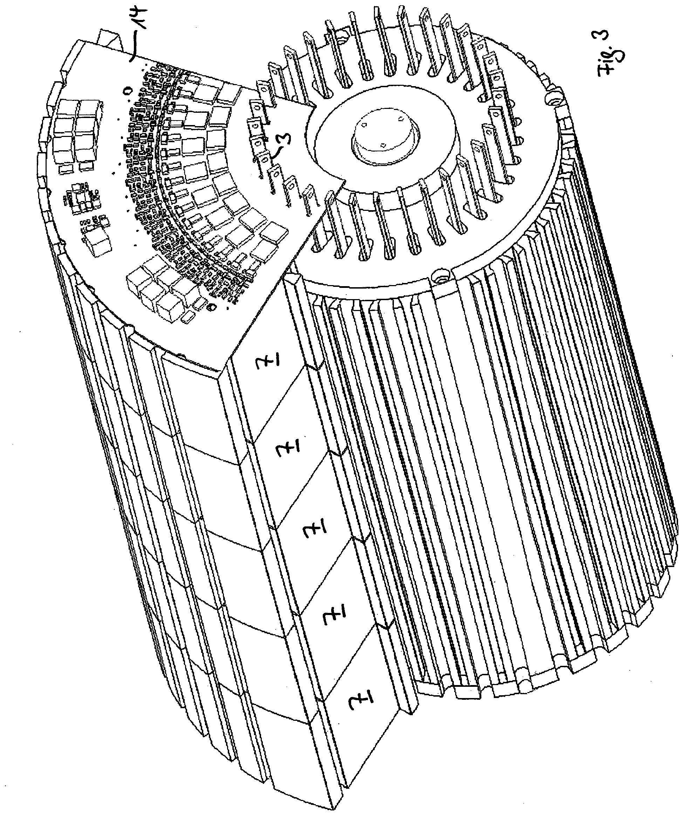

Figur 3 zeigt die Anordnung einer Steuerplatine 14, die sich zumindest im Wesentlichen über denselben Winkelbereich wie beim Segment 7 erstreckt und somit die Form eines Kreisringsegmentes aufweist. Die hier dargestellte Steuerplatine 14 umfasst eine Leistungselektronik zur Ansteuerung derjenigen Stäbe 3 des Stators, die in demselben Winkelbereich in der Platine 14 kontaktiert einliegen.

Die Steuerplatine überdeckt hier einen Teil der Stirnseite des Motors 3 und im Wesentlichen vollständig die Stirnseite des letzten bzw. ersten Segmentes 7.

Die hier gezeigte Gesamtanordnung aus allen axial hintereinanderliegenden Segmenten 7 dieser gemeinsamen Umfangsposition mit den darin enthaltenen Batteriezellen und Platinen bildet zusammen mit der Steuerplatine 14 eine Funktionseinheit, mit welcher alleine bereits der Elektromotor betrieben werden kann.

Dies verdeutlicht auch, dass die erfindungsgemäße Realisierung der Energieversorgungseinheit sich nicht zwingend in Umfangsrichtung über vollständige 360 ° erstrecken muss.

In diesem Beispiel können am Motor 1 noch drei weitere nicht gezeigte identische Funktionseinheiten montiert werden, wodurch im Wesentlichen die gesamte elektrische Kapazität vervierfacht werden kann, ebenso wie das Drehmoment des Motors. Solche sodann vier realisierten Funktionseinheiten bilden eine Energieversorgung im Sinne der Erfindung, die sich in Umfangsrichtung über volle 360 Grad erstreckt, insbesondere hierbei zusätzlich eine vierfache Redundanz bildet.

Die Erfindung ist nicht auf die hier dargestellte 4-fach-Segmentierung beschränkt. Es können sowohl mehr als auch weniger Segmente vorgesehen sein.

## Patentansprüche

1. Elektro-Antriebssystem umfassend einen Elektromotor (1) und eine Energieversorgung (6), wobei
• die Energieversorgung (6) radial außen am Elektromotor (1) anliegend und in Umfangsrichtung um den Elektromotor (1) herum angeordnet ist,
• die Energieversorgung (6) in einem hohlzylindrischen Gehäuse aufgenommen ist, in dessen inneren hohlen Bereich der Elektromotor (1) angeordnet ist,
• a) das hohlzylindrische Gehäuse in der Umfangsrichtung in wenigstens zwei Segmente unterteilt ist oder
• b) das hohlzylindrische Gehäuse in der axialen Richtung in mehrere Ringelemente unterteilt ist, wobei jedes Ringelement in Umfangsrichtung in wenigstens zwei Segmente (7) unterteilt ist,
• jeweils einem jeden in Umfangsrichtung gemäß Merkmal a) erstreckten Segment (7) des hohlzylindrischen Gehäuses der Energieversorgung (6) bzw. jeweils allen an einer gemeinsamen Umfangsposition gemäß Merkmal b) angeordneten Segmenten (7) von axial hintereinanderliegenden Ringelementen eine eigene Steuerplatine (14) zugeordnet ist, die in zumindest teilweiser Überdeckung der axialen Stirnflächen von der Energieversorgung (6) und dem Elektromotor (1) angeordnet ist und zur Verteilung der Energie der Energieversorgung auf ein Statorbestromungssystem des Elektromotors (1) an einen Teil desselben angeschlossen ist und durch alle den Segmenten (7) zugeordneten Steuerplatinen (14) jeweils eine Leistungselektronik zur Steuerung des Elektromotors (1) ausgebildet ist, an der die jeweilige Spannung des betreffenden Segments (7) gemäß Merkmal a) bzw. die gereihten Summenspannungen von den an einer gemeinsamen Umfangsposition gemäß Merkmal b) axial hintereinanderliegenden Segmenten (7) elektrisch angeschaltet ist, so dass der Elektromotor (1) mit der Energie und Leistungselektronik alleine eines Segments (7) gemäß Merkmal a) bzw. der Segmente (7) einer einzigen Umfangsposition gemäß Merkmal b) betreibbar ist.

2. Elektro-Antriebssystem nach Anspruch 1, **dadurch gekennzeichnet, dass** das hohlzylindrische Gehäuse eine Vielzahl von Ausnehmungen (8), insbesondere zylindrischen Ausnehmungen (8) aufweist, bevorzugt, die sich in axialer Richtung erstrecken, in welchen Energiespeicherzellen aufgenommen sind oder zumindest aufnehmbar sind.

3. Elektro-Antriebssystem nach einem der vorherigen Ansprüche, **dadurch gekennzeichnet, dass** die axiale Länge der Ringelemente gemäß Merkmal b) angepasst ist, um genau eine axial liegende Energiespeicherzelle in einer jeweiligen zylindrischen Ausnehmung (8) aufzunehmen.

4. Elektro-Antriebssystem nach einem der vorherigen Ansprüche, **dadurch gekennzeichnet, dass** zwischen je zwei benachbart axial hintereinanderliegenden Segmenten (7) von Ringelementen eine Verbindungsplatine (11), insbesondere eine kreisringsegmentförmige Verbindungsplatine (11) angeordnet ist.

5. Elektro-Antriebssystem nach Anspruch 4, **dadurch gekennzeichnet, dass** mit den Verbindungsplatinen (11) die Energiespeicherzellen wenigstens einer Teilanzahl, insbesondere gruppenweise oder aller an einer gemeinsamen Umfangsposition axial hintereinander angeordneter Segmente (7) elektrisch in Reihe geschaltet sind.

6. Elektro-Antriebssystem nach Anspruch 4 oder 5, **dadurch gekennzeichnet, dass** in einem Bereich (13) zwischen je zwei in Umfangsrichtung benachbarten Segmenten (7) für alle axial hintereinander liegende Segmente (7) einer gemeinsamen Umfangsposition eine sich achsparallel erstreckende Platine angeordnet ist, insbesondere die sich im Wesentlichen über die gesamte axiale Länge des hohlzylindrischen Gehäuses der Energieversorgung erstreckt, bevorzugt wobei diese Platine mit jeder Verbindungsplatine (11) zwischen zwei benachbart axial hintereinanderliegenden Segmenten (7) elektrisch verbunden ist.

7. Elektro-Antriebssystem nach Anspruch 6, **dadurch gekennzeichnet, dass** die Platine eine Elektronik zum Energiespeicherzellenmanagement, insbesondere zur Prüfung der insbesondere in jedem Segment (7) oder in allen Segmenten (7) einer gemeinsamen Umfangsposition gereihten Zellspannungen umfasst.

8. Elektro-Antriebssystem nach einem der vorherigen Ansprüche, **dadurch gekennzeichnet, dass** die Steuerplatine kreisringsegmentförmig ausgebildet ist und an einen Teil des Statorbestromungssystems angeschlossen ist, der sich über denselben Winkelbereich erstreckt, wie das betreffende Segment.

9. Elektro-Antriebssystem nach einem der vorherigen Ansprüche, **dadurch gekennzeichnet, dass** das Statorbestromungssystem durch eine Vielzahl bestrombarer Stäbe (3) ausgebildet ist, die sich in axialer Richtung durch den Stator des Elektromotors (1) erstrecken und an einem ihrer Enden mit einem gemeinsamen Kurzschlußring verbunden sind und an dem anderen Ende mit einer der Steuerplatinen (14) verbunden sind.

10. Elektro-Antriebssystem nach einem der vorherigen Ansprüche, **dadurch gekennzeichnet, dass** das Statorbestromungssystem eine Vielzahl von Bestromungseinheiten, insbesondere Wicklungen oder bevorzugt Stäben (3) gemäß Anspruch 9 aufweist, die einer Anzahl von mehr als 3 Phasen, bevorzugt wenigstens 6 Phasen zugeordnet sind, insbesondere wobei die Spannungsdifferenz zwischen zwei Phasen oder einer Phase und Masse kleiner gleich 60 Volt ist.

11. Elektro-Antriebssystem nach einem der vorherigen Ansprüche, **dadurch gekennzeichnet, dass** jedes Segment (7) in axialer Richtung auf die äußere Mantelfläche des Elektromotors (1) aufsteckbar oder aufschiebbar ist, insbesondere mittels radialen Stegen (5), die zumindest endseitig in axialen Führungsnute (4) gleitend eingreifen.

12. Elektro-Antriebssystem nach einem der vorherigen Ansprüche, **dadurch gekennzeichnet, dass** die Energieversorgung (6) und der Elektromotor (1) zueinander wärmetechnisch isoliert sind, insbesondere durch eine radiale Beabstandung, bevorzugt über welche hinweg die Gehäuse von der Energieversorgung (6) und des Elektromotors (1) nur durch Stege (5) verbunden sind.

13. Elektro-Antriebssystem nach Anspruch 12, **dadurch gekennzeichnet, dass** der Elektromotor (1) und die Energieversorgung jeweils eine eigene und voneinander unabhängige Entwärmungssysteme aufweisen, insbesondere durch Heatpipes, die sich axial durch den Elektromotor (1) und/oder die Energieversorgung (6) erstrecken.

14. Elektro-Antriebssystem nach einem der vorherigen Ansprüche, **dadurch gekennzeichnet, dass** in der Blechung des Elektromotors (1) wenigstens eine Nut bis zum Innendurchmesser des Stators verlängert ist, in welcher ein Magnetfeldsensor angeordnet ist, der von der Leistungselektronik einer der Steuerplatinen (14) in die Nut hineinragt.

15. Elektro-Antriebssystem nach einem der vorherigen Ansprüche, **dadurch gekennzeichnet, dass** zur Drehwinkelerfassung auf der Welle des Elektromotors (1) wenigstens ein Permanentmagnet angeordnet ist, dessen Magnetfeld durch einen auf einer darüber liegenden Platine, insbesondere auf einer stirnseitigen Steuerplatine (14) montierten Drehwinkelsensor, insbesondere 180-Grad-Sensor, erfassbar ist.

## Claims

1. Electric drive system comprising an electric motor (1) and a power supply (6), wherein
• the power supply (6) is arranged in a manner bearing radially against the outside of the electric motor (1) and around the electric motor (1) in the circumferential direction,
• the power supply (6) is accommodated in a hollow-cylindrical housing, the electric motor (1) being arranged in the inner hollow region of the said hollow-cylindrical housing,
• a) the hollow-cylindrical housing is subdivided into at least two segments in the circumferential direction or
• b) the hollow-cylindrical housing is subdivided into a plurality of ring elements in the axial direction, wherein each ring element is subdivided into at least two segments (7) in the circumferential direction,
• a dedicated control circuit board (14) is associated respectively with each segment (7), which is extended in the circumferential direction according to feature a), of the hollow-cylindrical housing of the power supply (6) or respectively with all of the segments (7), which are arranged in a common circumferential position according to feature b), of ring elements which are situated axially one behind the other, which control circuit board is arranged with an at least partial overlap of the axial end faces of the power supply (6) and the electric motor (1) and, for distributing the power of the power supply to a stator energization system of the electric motor (1), is connected to a portion of the said stator energization system and a power electronics system for controlling the electric motor (1) is respectively formed by all of the control circuit boards (14), which are associated with the segments (7), the respective voltage of the segment (7) in question according to feature a) or the combined sum voltages of the segments (7) which are situated axially one behind the other in a common circumferential position according to feature b) being electrically connected to the said power electronics system, so that the electric motor (1) can be operated with the power and the power electronics system only of one segment (7) according to feature a) or of the segments (7) of a single circumferential position according to feature b) .

2. Electric drive system according to Claim 1, **characterized in that** the hollow-cylindrical housing has a large number of recesses (8), in particular cylindrical recesses (8), preferably which extend in the axial direction, in which recesses energy storage cells are accommodated or at least can be accommodated.

3. Electric drive system according to either of the preceding claims, **characterized in that** the axial length of the ring elements according to feature b) is adjusted in order to precisely receive an axially situated energy storage cell in a respective cylindrical recess (8).

4. Electric drive system according to one of the preceding claims, **characterized in that** a connecting circuit board (11), in particular a connecting circuit board (11) in the form of a segment of a ring, is arranged between in each case two segments (7) of ring elements, which segments are situated adjacently axially one behind the other.

5. Electric drive system according to Claim 4, **characterized in that** the energy storage cells at least of some, in particular in groups, or all segments (7), which are arranged axially one behind the other in a common circumferential position, are connected electrically in series by the connecting circuit boards (11) .

6. Electric drive system according to Claim 4 or 5, **characterized in that** a circuit board which extends axially in parallel is arranged in a region (13) between in each case two segments (7), which are adjacent in the circumferential direction, for all segments (7) of a common circumferential position which are situated axially one behind the other, in particular which circuit board extends substantially over the entire axial length of the hollow-cylindrical housing of the power supply, preferably wherein this circuit board is electrically connected to each connecting circuit board (11) between two segments (7) which are situated adjacently axially one behind the other.

7. Electric drive system according to Claim 6, **characterized in that** the circuit board comprises an electronics system for energy storage cell management, in particular for checking the cell voltages which are combined in particular in each segment (7) or in all segments (7) of a common circumferential position.

8. Electric drive system according to one of the preceding claims, **characterized in that** the control circuit board is designed in the form of a segment of a ring and is connected to a portion of the stator energization system, which portion extends over the same angular region as the segment in question.

9. Electric drive system according to one of the preceding claims, **characterized in that** the stator energization system is formed by a large number of energizable bars (3) which extend through the stator of the electric motor (1) in the axial direction and are connected at one of their ends to a common short-circuiting ring and are connected to one of the control circuit boards (14) at the other end.

10. Electric drive system according to one of the preceding claims, **characterized in that** the stator energization system has a large number of energization units, in particular windings or preferably bars (3) according to Claim 9, which are assigned to a number of more than 3 phases, preferably at least 6 phases, in particular wherein the voltage difference between two phases or one phase and earth is less than or equal to 60 volts.

11. Electric drive system according to one of the preceding claims, **characterized in that** each segment (7) can be mounted onto or pushed onto the outer lateral surface of the electric motor (1) in the axial direction, in particular by means of radial webs (5) which engage in a sliding manner in axial guide grooves (4) at least at the end.

12. Electric drive system according to one of the preceding claims, **characterized in that** the power supply (6) and the electric motor (1) are thermally insulated from one another, in particular by a radial distance, preferably over which the housings of the power supply (6) and of the electric motor (1) are connected only by webs (5).

13. Electric drive system according to Claim 12, **characterized in that** the electric motor (1) and the power supply each have a dedicated heat-removal system, which heat-removal systems are independent of one another, in particular by heat pipes which extend axially through the electric motor (1) and/or the power supply (6).

14. Electric drive system according to one of the preceding claims, **characterized in that**, in the lamination of the electric motor (1), at least one slot is extended as far as the inside diameter of the stator in which a magnetic field sensor is arranged, which magnetic field sensor protrudes into the slot from the power electronics system of one the control circuit boards (14).

15. Electric drive system according to one of the preceding claims, **characterized in that**, for the purpose of detecting the rotation angle, at least one permanent magnet is arranged on the shaft of the electric motor (1), the magnetic field of the said permanent magnet being detectable by a rotation angle sensor mounted on a circuit board which is situated over the magnet, in particular mounted on an end-side control circuit board (14), in particular a 180-degree sensor.

## Revendications

1. Système d'entraînement électrique comprenant un moteur électrique (1) et une source d'énergie (6),
* la source d'énergie (6) étant disposée reposant contre le moteur électrique (1) à l'extérieur dans le sens radial et autour du moteur électrique (1) dans la direction périphérique,
* la source d'énergie (6) étant accueillie dans un boîtier cylindrique creux dans la zone creuse interne duquel est disposé le moteur électrique (1),
* a) le boîtier cylindrique creux étant subdivisé en au moins deux segments dans la direction périphérique ou
* b) le boîtier cylindrique creux étant subdivisé en plusieurs éléments annulaires dans la direction axiale, chaque élément annulaire étant subdivisé en au moins deux segments (7) dans la direction périphérique,
* une platine de commande (14) propre étant respectivement associée à chaque segment (7), qui s'étend dans la direction périphérique selon la caractéristique a), du boîtier cylindrique creux de la source d'énergie (6) ou respectivement à tous les segments (7) des éléments annulaires disposés les uns derrière les autres dans la direction axiale, qui sont disposés à une position périphérique commune selon la caractéristique b), ladite platine de commande étant disposée en recouvrant au moins partiellement les surfaces frontales axiales de la source d'énergie (6) et du moteur électrique (1) et étant raccordée à une partie d'un système d'alimentation électrique de stator du moteur électrique (1) en vue de distribuer l'énergie de la source d'énergie sur celui-ci et une électronique de puissance destinée à commander le moteur électrique (1) étant respectivement formée par toutes les platines de commande (14) associées aux segments (7), à laquelle électronique de puissance sont connectées électriquement la tension respective du segment (7) concerné selon la caractéristique a) ou les tensions totales en série des segments (7) disposés les uns derrière les autres dans la direction axiale à une position périphérique commune selon la caractéristique b), de sorte que le moteur électrique (1) peut être mis en fonctionnement avec l'énergie et l'électronique de puissance uniquement d'un segment (7) selon la caractéristique a) ou des segments (7) d'une position périphérique unique selon la caractéristique b).

2. Système d'entraînement électrique selon la revendication 1, **caractérisé en ce que** le boîtier cylindrique creux possède une pluralité de cavités (8), notamment, de cavités cylindriques (8), de préférence qui s'étendent dans la direction axiale, dans lesquelles sont accueillies ou au moins peuvent être accueillies des cellules d'accumulateur d'énergie.

3. Système d'entraînement électrique selon l'une des revendications précédentes, **caractérisé en ce que** la longueur axiale des éléments annulaires selon la caractéristique b) est adaptée afin d'accueillir exactement une cellule d'accumulateur d'énergie reposant dans le sens axial dans une cavité cylindrique (8) respective.

4. Système d'entraînement électrique selon l'une des revendications précédentes, **caractérisé en ce qu'**une platine de liaison (11), notamment une platine de liaison (11) en forme de segment d'anneau circulaire, est disposée entre deux segments (7) respectifs, disposés les uns derrière les autres dans la direction axiale de manière adjacente, des éléments annulaires.

5. Système d'entraînement électrique selon la revendication 4, **caractérisé en ce que** les cellules d'accumulateur d'énergie d'au moins un nombre partiel, notamment par groupes ou de la totalité des segments (7) disposés les uns derrière les autres dans la direction axiale à une position périphérique commune sont branchées électriquement en série avec les platines de liaison (11) .

6. Système d'entraînement électrique selon la revendication 4 ou 5, **caractérisé en ce qu'**une platine qui s'étend parallèlement à l'axe, notamment qui s'étend sensiblement sur toute la longueur axiale du boîtier cylindrique creux de la source d'énergie, est disposée dans une zone (13) entre deux segments (7) respectifs voisins dans la direction périphérique pour tous les segments (7) d'une position périphérique commune disposés les uns derrière les autres dans la direction axiale, cette platine étant de préférence reliée électriquement à chaque platine de liaison (11) entre deux segments (7) disposés les uns derrière les autres dans la direction axiale de manière adjacente.

7. Système d'entraînement électrique selon la revendication 6, **caractérisé en ce que** la platine comprend une électronique de gestion de cellules d'accumulateur d'énergie, notamment destinée à contrôler les tensions de cellules montées en série notamment dans chaque segment (7) ou dans tous les segments (7) d'une position périphérique commune.

8. Système d'entraînement électrique selon l'une des revendications précédentes, **caractérisé en ce que** la platine de commande est de configurée en forme de segment d'anneau circulaire et est raccordée à une partie du système d'alimentation électrique de stator qui s'étend sur la même plage angulaire que le segment concerné.

9. Système d'entraînement électrique selon l'une des revendications précédentes, **caractérisé en ce que** le système d'alimentation électrique de stator est formé par une pluralité de barres (3) pouvant être alimentées électriquement, qui s'étendent dans la direction axiale à travers le stator du moteur électrique (1) et sont reliées à l'une de leurs extrémités à un anneau de court-circuit commun et sont reliées à l'autre extrémité à l'une des platines de commande (14).

10. Système d'entraînement électrique selon l'une des revendications précédentes, **caractérisé en ce que** le système d'alimentation électrique de stator possède une pluralité d'unités d'alimentation électrique, notamment des enroulements ou de préférence des barres (3) selon la revendication 9, lesquelles sont associées à un nombre de phases supérieur à 3, de préférence inférieur à 6 phases, la différence de tension entre deux phases ou entre une phase et la masse étant notamment inférieure ou égale à 60 volts.

11. Système d'entraînement électrique selon l'une des revendications précédentes, **caractérisé en ce que** chaque segment (7) peut être enfiché ou peut être glissé dans la direction axiale sur l'enveloppe extérieure du moteur électrique (1), notamment au moyen de barrettes (5) radiales qui viennent en prise de manière glissante au moins du côté de l'extrémité dans des rainures de guidage (4) axiales.

12. Système d'entraînement électrique selon l'une des revendications précédentes, **caractérisé en ce que** la source d'énergie (6) et le moteur électrique (1) sont isolés thermiquement l'un de l'autre, notamment par un espacement radial, de préférence au travers duquel le boîtier de la source d'énergie (6) et le boîtier du moteur électrique (1) sont uniquement reliés par des barrettes (5) .

13. Système d'entraînement électrique selon la revendication 12, **caractérisé en ce que** le moteur électrique (1) et la source d'énergie possèdent respectivement un système de dissipation de chaleur propre et indépendant l'un de l'autre, notamment par des caloducs qui s'étendent dans le sens axial à travers le moteur électrique (1) et/ou la source d'énergie (6).

14. Système d'entraînement électrique selon l'une des revendications précédentes, **caractérisé en ce qu'**au moins une rainure dans l'empilage de tôles du moteur électrique (1) est prolongée jusqu'au diamètre intérieur du stator, dans laquelle est disposé un capteur de champ magnétique qui fait saillie dans la rainure depuis l'électronique de puissance de l'une des platines de commande (14).

15. Système d'entraînement électrique selon l'une des revendications précédentes, **caractérisé en ce qu'**au moins un aimant permanent est disposé sur l'arbre du moteur électrique (1) en vue de détecter l'angle de rotation, dont le champ magnétique peut être détecté par un capteur d'angle de rotation, notamment un capteur à 180 degrés, monté sur une platine qui se trouve au-dessus, notamment sur une platine de commande (14) côté frontal.
